# EUROPÄISCHE PATENTSCHRIFT

(11) **EP 1 709 358 B1**
(45) Veröffentlichungstag und Bekanntmachung des Hinweises auf die Patenterteilung: **21.04.2010**
(21) Anmeldenummer: 04764596.5
(22) Anmeldetag: 25.08.2004
(51) Int. Cl.: F16M 11/12

(54) **KAMERASTATIV**
CAMERA STAND
SUPPORT DE CAMERA

(30) Priorität: 04.11.2003 DE 20317322 U
(43) Veröffentlichungstag der Anmeldung: 11.10.2006
(73) Patentinhaber: Kämpfert, Marco, 13437 Berlin (DE)
(72) Erfinder: Kämpfert, Marco, 13437 Berlin (DE)
(74) Vertreter: Bittner, Thomas L.
(86) Internationale Anmeldenummer: PCT/EP2004/009622
(87) Internationale Veröffentlichungsnummer: WO 2005/052434

(56) Entgegenhaltungen:
- FR-A- 2 382 140
- US-A- 4 548 373
- US-A- 5 014 693

## Beschreibung

Gegenstand der Erfindung ist ein Kamerastativ, und zwar ein ortsfest montierbares gelenkiges Kamerastativ mit einer an einem Stativkopf befestigten, insbesondere auswechselbar befestigten Kamera.

Systeme dieser Art werden insbesondere zur routinemäßigen optischen Inspektion technischer Teile eingesetzt, hier speziell im Bereich der Fertigung zur Prozessüberwachung und Qualitätskontrolle.

Im Rahmen von Serienfertigungsprozessen erfolgen solche optischen Qualitätsprüfungen der gefertigten Teile in aller Regel in der Fertigungslinie unter Automatensteuerung. Für Vorserien oder bei der Kleinserienfertigung von Vormustern und Handmustern müssen Vorrichtungen zur optischen Inspektion der technischen Teile jedoch flexibel einstellbar ausgelegt und zumeist dementsprechend durch den bedienenden Kontrollingenieur von Hand einstellbar, führbar und bedienbar sein. Diese flexible Bedienbarkeit muss andererseits aber auch so einfach handhabbar sein, dass sie einen schnellen routinemäßigen Wechsel der Prüflinge ermöglicht.

Geräte zur optischen Inspektion technischer Teile aus Stichproben, Kleinserien oder Vorserien, also Geräte für die optische Qualitätskontrolle zwischen der Musterentwicklung und der Großserie, sind rar. Sie stammen zumeist aus der Entwicklungsmusterprüfung und sind dementsprechend zu zeitaufwendig und sperrig für eine routinemäßige Teileprüfung im dargelegten Zwischenbereich zwischen Musterfertigung und Serienfertigung. Aus dem Dokument US 5,014,693, das als nächstliegender Stand der Technik angesehen wird, ist ein verschwenkbares Stativ bekannt, bei dem zwei hintereinander angeordnete Trägerarme um eine jeweilige Drehachse drehbar gelagert sind. Auch das Dokument US 4,548,373 offenbart ein Stativ, welches dazu dient, ein hieran montiertes Mikroskop in verschiedene Stellungen zu verlagern. Es sind mehrere Drehachsen gebildet.

Ausgehend von diesem Stand der Technik liegt der Erfindung die Aufgabe zugrunde, ein ortsfest montierbares oder ortsfest montiert verfahrbares gelenkiges Kamerastativ für die optische Inspektion technischer Teile der eingangs genannten Art zu schaffen, das auch bei routinemäßigem Arbeiten unter manueller Steuerung ein rasches Positionieren und Repositionieren sowohl der Prüflinge als auch einer Kamera oder eines entsprechenden optischen Inspektionsinstrumentes ermöglicht.

Zur Lösung dieser Aufgabe schafft die Erfindung ein gelenkiges Kamerastativ mit den im Anspruch 1 genannten Merkmalen.

Ein Kamerastativ mit den Merkmalen der Erfindung besteht dementsprechend im Wesentlichen aus einem Stativfuß und zwei gegeneinander gelenkig miteinander verbundenen und in der xy-Prüfebene verschwenkbaren Stativarmen, nämlich einem Zwischenarm und einem Kameraträgerarm, von denen der Kameraträgerarm zusätzlich senkrecht zur xy-Prüfebene verschwenkbar un d als sogenannter Nullkraftarm ausgebildet ist.

Unter dem Begriff "Nullkraftarm" wird dabei gemäß üblichem Sprachgebrauch ein gelenkig gelagerter Balken verstanden, der mit oder ohne an diesem befestigter Nutzlast in sämtlichen vom Gelenk ermöglichten Stellungen drehmomentfrei ist. Beim Überführen von einer ersten in eine durch das jeweils verwendete Lagergelenk ermöglichte zweite Lage ist daher, von den physikalisch notwendigen Verlustkräften abgesehen, keine Stellkraft erforderlich. Außerdem bleibt der ohne Kraftaufwand, das heißt mit "Nullkraft" verstellte Arm, solange keine Trägheitskräfte wirken, ohne Arretierung in der Position stehen, in die er, in der Regel durch manuelles Stellen, verstellt worden ist.

Nullkraftarme dieser Art sind in großer Anzahl im kommerziellen Teilehandel, auch nach individueller Konstruktionsvorgabe, erhältlich. Die Krafttarierung in solchen Nullkraftarmen kann im einfachsten Fall durch eine Massetarierung verwirklicht, aber ebenso auch durch mechanische Federkraft, mittels Gasdruckfedern oder elektronisch gesteuerte elektrische Kompensationen aufgebracht werden. Zumeist sind solche Nullkraftarme zudem gedämpft gelagert, um den Einfluss von Trägheitskräften und Störkräften wie beispielsweise den Einfluss von Strömungen im Umgebungsmedium, zu unterdrücken, zumindest gering zu halten.

Das gelenkige Kamerastativ der Erfindung aus Zwischenarm und Kameraträgerarm ist so aufgebaut, dass das Fußende des Zwischenarms über einen Stativfuß ortsfest fixierbar ist, während der distale Kopf des als Nullkraftarm ausgebildeten Kameraträgerarms mit einem Kameraanschluss zum bedarfsweise auch lösbaren Befestigen einer Kamera ausgestattet ist.

Ein solcher Art aufgebautes gelenkiges Kamerastativ ermöglicht ein rasches und freies Führen und Positionieren einer dokumentierenden Kamera über den unterschiedlichsten und auch in rascher Folge wechselnden technischen Prüflingen. Gegenüber nach Art eines Mikroskops aufgebauten Kamerastativen braucht also nicht das zu prüfende Werkstück aufwendig positioniert und dann an einer Stellschraube die Kamera aufwärts und abwärts geführt zu werden, sondern braucht lediglich die Kamera unter Kontrolle, beispielsweise an einem Monitor, über das zu prüfende Teil geführt zu werden. Diese Führung ist aufgrund der alle drei Raumdimensionen erfassenden Gelenkigkeit des Kamerastativs unter freier Führung im Raum ohne Kraftaufwand und ohne das Erfordernis einer Arretierung des Stativs möglich.

Da es für die Flexibilität des gelenkigen Kamerastativs sinnvoll ist, insbesondere bei einem flexibel genutzten Arbeitsplatz, sowohl den Zwischenarm bezüglich seiner Schwenkbarkeit auf dem Stativlager als auch die Schwenkbarkeit des Kameraträgers auf dem kameraseitigen Kopfende des Zwischenträgers so zu konfigurieren, dass beide Arme auf beiden Lagern um 360° schwenkbar, also frei drehbar, gelagert sind, ist der in Z-Richtung fixierte Zwischenarm nach einer Ausgestaltung der Erfindung durch ein fixiertes Anstellen gegenüber der xy-Bezugsebene um wenige Grad zweckmäßig, um einen freien Drehraum für die am Kopf des Kameraträgers angeschlossene Kamera zu gewährleisten. Dieser Anstellwinkel wird zweckmäßigerweise in aller Regel zwischen ungefähr 10° und 40° gewählt werden, wobei ein fixierter Anstellwinkel von über 60° kaum noch Sinn macht. Je größer der Anstellwinkel des Zwischenarms gegenüber der xy-Bezugsebene ist, umso kleiner wird die von gelenkigen Kamerastativ erfassbare Prüffläche auf der Objektträgerplatte.

Ein wesentlicher Vorteil des Kamerastativs mit den Merkmalen der Erfindung ist darin zu sehen, dass der Stativfuß sowohl oberhalb als auch unterhalb der gelenkig beweglichen Stativteile sowie der am Stativ gegebenenfalls angesetzten Kamera ortsfest fixiert werden kann. Bei einer Montage "über Kopf", also einem Fixieren eines Kamerastativfußes oberhalb der für die beweglichen Kamerastativteile benötigten freien Drehräume, kann durch das frei im Raum mögliche Verschieben der montierten Kamera jede beliebige Koordinate auf einem unter der Stativfixierung und unterhalb der Drehräume der beweglichen Stativteile liegenden Objektträgerplatte erfasst werden. Dies ist bei einer Montage des Stativfußes beispielsweise zentral auf dem Objektträgertisch oder bei einem Anklemmen des Kamerastativs am Rand eines solchen Objektträgertisches nicht mehr in diesem vollen Umfang möglich. Die Fläche, die der Stativfuß für die Montage benötigt, bleibt für eine Werkstück-Positonierung versperrt. Bei einer Randklemmung des Stativfußes an der Objektträgerplatte muss die Summe der Längen der beiden Stativarme, also des Zwischenarmes und des Kameraträgerarms, zum Erfassen einer vorgegebenen Fläche und doppelt so lang sein als bei zentraler Montage. Andererseits wird dagegen jedoch eine "Auf-Tisch-Montage" beziehungsweise eine Montage durch Einklemmen an einem Objektträgertischrand für einen variablen Aufbau des Prüfplatzes besser geeignet sein.

Die im Zusammenhang mit dem Kamerastativ verwendete Kamera kann prinzipiell beliebig am Kopf des Kameraträgers gehaltert sein, und zwar sowohl starr fixiert als auch schwenkbar und manuell fixierbar, abnehmbar und rejustierbar oder aber starr verbunden, lösbar oder unlösbar, auf einem separaten Anschlussstück fixiert sein, das seinerseits in prinzipiell beliebiger Weise, das heißt insbesondere rein mechanisch, elektrisch oder elektronisch in Nachführung zum frei wählbaren und einstellbaren Anstellwinkel des Kameraträgers bezüglich der xy-Bezugsebene neigungskorrigierend beaufschlagt sein kann.

Wäre eine Kamera beispielsweise am Kameraträgerkopf so starr fixiert, dass die optische Achse senkrecht zur Längsachse und bei komplanarer Ausrichtung der Kameraträgerachse zur xy-Bezugsebene rechtwinklig zur xy-Bezugsebene ausgerichtet, so würde die auf diese Weise in der xy-Bezugsebene durch die optische Achse der Kamera definierte Koordinate bei einem Anstellen des Kameraträgers gegenüber der xy-Bezugsebene aus dem Anfangskoordinatenpunkt auswandern. Gleichzeitig würde die optische Achse der Kamera nicht mehr senkrecht, sondern mit zunehmenden Anstellwinkel des Kameraträgers zunehmend schräg auf die xy-Bezugsebene auftreffen. Für einfachere Geräte, bei denen die Anstellwinkel des Kameraträgers auf einen nicht allzu großen Spielraum beschränkt, zumindest im Nutzungsbereich beschränkt, eingestellt sind und die Kamera selbst über einen größeren Tiefenschärfebereich verfügt, mag ein solcher Abbildungs-Justierfehler hinnehmbar sein. Für exakte Qualitätsprüfungsvermessungen von technischen Prüfteilen kann eine starre Verbindung der Kamera zu Messabweichungen führen, die über der zulässigen Toleranz liegen. Bereits mit einfachen Mitteln kann jedoch ohne Weiteres ein Nachführen der optischen Achse der Kamera in der Weise erreicht werden, dass das mit der Kamera selbst starr verbundene Anschlussstück des Kameraanschlusses über ein Drehgelenk so nachgeführt wird, dass die optische Achse der Kamera stets exakt in z-Richtung ausgerichtet bleibt, und zwar auch bei größerem Verstellbereich des Anstellwinkels des Kameraträgers relativ zur xy-Bezugsebene. Eine solche Korrektur kann beispielsweise bereits durch eine einfache mechanische Zahnstangenführung eines neigungskorrigierenden Zahnrades hergestellt werden. Beliebige andere und aufwendigere Nachführungen für die optische Achse der Kamera stehen dem Fachmann ohne Weiteres zu Verfügung. Im Einzelnen wird die Realisierung einer gegebenenfalls erforderlichen Nachführung der Kameraachse ein Kompromiss zwischen optisch erforderlicher Spezifikation und den dafür aufzuwendenden Kosten sein.

Das gelenkige Stativ mit den Merkmalen der Erfindung ist primär für den professionellen gewerblichen Einsatz im Bereich der professionell durchgeführten Qualitätskontrolle bestimmt. Aus diesem Grund wird der Kopf des Stativs in aller Regel mit einer Kamera, insbesondere mit einer Videokamera bestückt sein, deren Bilder unmittelbar an einen Rechner zur Bildauswertung übertragen werden. Dabei lässt sich das der Erfindung zugrunde liegende Prinzip und Ideal der frei im Raum schwebenden Prüfkamera dadurch am leichtesten und ehesten verwirklichen, dass die Kamera als batteriebetriebene Kamera ausgelegt und mit einer bidirektionalen Sende- und Empfangsantenne ausgerüstet ist, die als Zugangspunkt (Accesspoint; AP) in ein rechnergestütztes lokales Funknetz (WLAN) eingebunden ist.

Weitere Ausgestaltungen der Erfindung sind den Unteransprüchen des Anspruchssatzes entnehmbar.

Die Erfindung ist im Folgenden anhand von Ausführungsbeispielen in Verbindung mit den Zeichnungen näher erläutert. Es zeigen:

Figur 1 in schematischer Seitensicht, zum Teil im Schnitt, ein erstes Ausführungsbeispiel des Kamerastativs mit den Merkmalen der Erfindung bei hängender Über-Kopf-Montage; und

Figur 2 in schematischer perspektivisch schräger Draufsicht ein zweites Ausführungsbeispiel eines Kamerastativs mit den Merkmalen der Erfindung bei zentraler Stativfixierung auf einem Objektträgertisch.

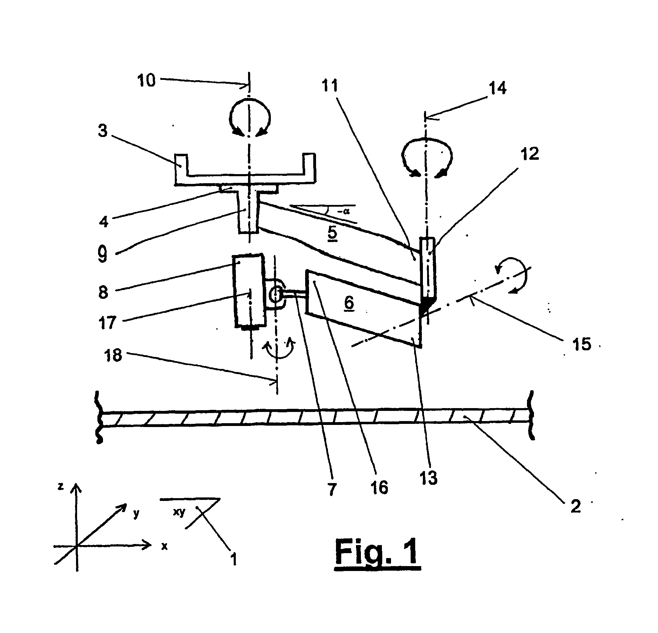

In der Figur 1 ist die Ausrichtung des dreidimensionalen Koordinatenraumes definiert, auf den in den Schutzansprüchen und in der vorliegenden Beschreibung der Erfindung Bezug genommen ist.

In der xy-Bezugsebene 1 ist eine plane starre Platte angeordnet, die als Objektträgerplatte 2 dient. Auf dieser Objektträgerplatte können optisch zu prüfende technische Teile zur Betrachtung abgelegt werden. Die Ablage der Prüflinge kann je nach Aufgabenstellung an beliebigem Ort, reproduzierbar an vorbestimmten und markierten Orten, oder definitiv an vorgegebenen Positionen fixiert werden.

In dem hier im Zusammenhang mit der Figur 1 erläuterten Anordnung ist das Kamerastativ mit den Merkmalen der Erfindung an einem Querträger oder Deckenträger 3 mit einem Stativfuß 4 ortfest sicher fixiert.

An dem hängend montierten Stativfuß 4 ist ein Zwischenarm 5 angelenkt, an dem wiederum distal kopfseitig ein Kameraträgerarms 6 beweglich angelenkt ist. Am distalen Kopf 16 des Kameraträgerarms 6 ist ein Kameraanschluss 7 vorgesehen, an dem zum bedarfsweise lösbaren Befestigen eine Kamera 8 angeschlossen ist.

Der Zwischenarm 5 ist stativseitig über ein Schwenklager 9 um 360° frei drehbar, in z-Richtung jedoch variabel höhenfixierbar, angelenkt. Zur Verwirklichung dieser Anordnung ist das stativseitige Ende des Zwischenarms 5 vorzugsweise mit einer Lagerschale ausgebildet, die einen starr am Stativfuß 4 in z-Richtung fixierten Schwenklagerzapfen im Rahmen der vorgesehenen Schenklagerzapfenlänge verschiebbar gelagert ist und in ihrer Höhe in z-Richtung durch einen unterhalb der Lagerschale vorgesehenen lösbaren und fixierbaren Auflage-Sperrring einseitig, erforderlichenfalls beidseitig der Lagerschale, axial ohne Einschränkung der Rotationsfähigkeit fixiert.

Die Ausbildung einer solcher Art höhenfixierbaren Anlenkung des Schwenklagers des Zwischenarms 5 kann je nach den Anforderungen des Anwendungsfalls eine kurze Verschiebungsstrecke vorsehen, die beispielsweise der Einjustierung des Stativs bei Erstmontage dient. Dabei kann eine solche vorzugsweise vorgesehene fixierbare Höhenverstellbarkeit dann gegebenenfalls ganz entfallen, wenn das Kamerastativ in größeren Stückzahlen für einen eindeutig definierten Arbeitsplatz zu fertigen ist. Dagegen kann eine auch größere senkrechte variable Höhenfixierbarkeit des Schwenklagers 9 erforderlich sein, wenn die zu prüfenden technischen Teile in einer ersten Durchlaufprüfung als flache Scheiben, beispielsweise als bestückte elektronische Platinen anfallen, danach jedoch in einer zweiten Prüfserie, Motorblockhauben oder ähnliche voluminöse Werkstücke zu prüfen sind.

Unabhängig von dieser in z-Richtung axialen variablen Höhenfixierbarkeit des Schwenklagers 9 ist der Zwischenarm 5 zwar starr fixiert, jedoch lösbar befestigt, so dass bedarfsweise zwischen beispielsweise zwei aufeinanderfolgenden Prüfreihen der Anstellwinkel α gegenüber der senkrechten Schwenkachse 10 variabel einstellbar und dann, zumeist für die gesamte nachfolgende Versuchsreihe, starr fixierbar ist. Der in der Figur 1 dargestellte Anstellwinkel α des Zwischenarms 5 liegt in Richtung -z unterhalb der xy-Bezugsebene und ist daher in der Figur 1 mit "-α " angegeben. Im Einzelnen richtet sich der jeweils einzustellende Anstellwinkel gegenüber der Schwenkachse 10 beziehungsweise der Anstellwinkel α gegenüber der xy-Bezugsebene bei Montage des Kamerastativs auf der Objektträgerplatte nach dem Bauvolumen der vom Stativ getragenen Kamera 8. Es muss gewährleistet sein, dass diese frei unter dem Stativfuß 4 und dem Schwenklager 9 sowie unter dem Zwischenarm 5 hindurch um 360° frei drehbar ist. Dabei ist zu berücksichtigen, dass diese freie Drehbarkeit auch dann gewährleistet sein muss, wenn die Kamera 8 gegenüber der xy-Bezugsebene in einer in z-Richtung angehobene Position verschwenkt wird.

Am kameraseitigen distalen Kopfende 11 des Zwischenarms 5 ist ein zweites in z-Richtung justiertes Schwenklager 12 vorgesehen, an dem das stativseitige (proximale) Ende 13 des Kameraträgerarms 6 so angelenkt ist, dass der Kameraträgerarm 6 mit der kopfseitig angeschlossenen Kamera 8 in der xy-Bezugsebene um 360°frei drehbar um die Achse 14 des Schwenklagers 12 gelagert ist.

Der Kameraträgerarm 6 ist weiterhin um eine Schwenkachse 15 schwenkbar, die flächenparallel zur xy-Bezugsebene, also komplanar zu dieser, ausgerichtet ist. Mit seinem kameraseitigen Kopfende 16 ist de r an diesem kameraseitigen Kopfende 16 befestigte Kameraanschluss 7 mit der Kamera 8 in z-Richtung aufwärts und abwärts führbar. Die Kamera 8 ist also mittels der senkrechten Schwenkachsen 10 und 14 frei über das Koordinatennetz in der xy-Bezugsachse führbar und dabei gleichzeitig durch die Schwenkbarkeit um die Schenkachse 15 auch in z-Richtung frei schwenkbar führbar. Die Kamera 8 ist auf diese Weise "entfesselt", das heißt frei in allen drei Raumdimensionen über der Objektträgerplatte verschiebbar. Um bei dieser Stativgelenkigkeit gleichzeitig auch ein raumungebundenes Schweben der Prüfkamera im Prüfraum über der Objektträgerplatte mit den Prüflingen zu gewährleisten, ist der Kameraträgerarm 6 als kraftkompensierender sogenannter "Nullkraftarm" ausgebildet. Durch das im vorgegebenen Anwendungsbereich einstellbare Austarieren der Kameramasse in z-Richtung durch eine Kompensation des Drehmoments an der Schwenkachse 15 kann dementsprechend erreicht werden, dass die Kamera auf eine beliebige Raumposition verschiebbar ist und bei einem Freigeben der Kamera an dieser Position auch unverändert verharrt. Die Prüfkamera 8 ist durch das Stativ der Erfindung also kraftfrei schwebend über der Objektträgerplatte 3 positionierbar und lässt sich zu Prüfzwecken oder Prüfvergleichszwecken beliebig auf oder über die Prüflinge in geringer oder größerer Höhe verschieben, ohne in der Endstellung gehalten oder anderweitig fixiert werden zu müssen.

Bei Einsatz des mit einer Kamera 8 bestückten Kamerastativs mit den Merkmalen der Erfindung zu exakt vermessenden Prüfzwecken können genaueste Ergebnisse erzielt werden, wenn gemäß einer vorzugsweise verwendeten Ausgestaltung der Erfindung der Kameraanschluss 7, der die Kamera 8 mit dem Kameraträger 6 verbindet, zwar starr mit der Kamera verbunden ist, aber gleichzeitig schwenkwinkelkompensierend derart am kameraseitigen Kopf des Kameraträgerarms 6 angelenkt ist, dass auch bei einem Verschwenken des Kameraträgerarms 6 um die Schwenkachse 15 die optische Achse 17 bezüglich der Längsachse des Kameraträgerarms 6 beziehungsweise nach Maßgabe des Schwenkwinkels um die Schwenkachse 15 so richtungskompensiert ausgerichtet wird, dass diese optisch Achse 17 der Kamera 8 stets exakt in z-Richtung, das heißt also stets exakt senkrecht zur xy-Bezugsebene, ausgerichtet ist. Dadurch wird ein Ausweichen der optischen Achse 17 aus der zur xy-Ebene senkrechten Sollstellung kompensierend vermieden, das sonst zu Paralaxe-Fehlern bei vermessender Aufnahmeauswertung führen würde. Dabei können solche Nachführungen im einzelnen prinzipiell durch einfache Zahnrad-Zahnstangen-Getriebe rein mechanisch als auch, wenn der Aufwand dies rechtfertigt, durch aufwendige elektronische und elektrisch übersetzende Steuerungen bewirkt werden.

Zur weiteren Verbesserung des Bedienungskomforts auch bei Feinjustierungen auf eine bestimmte durch einen Prüfling vorgegebene Position im xy-Koordinatennetz der xy-Bezugsebene ist vorzugsweise im Stativ eine dritte senkrechte Schwenkachse 18 in Verbindung mit dem Kameraanschluss 7 vorgesehen, die ein begrenztes Verschwenken der optischen Achse 17 der Kamera 8 im Koordinatennetz der xy-Bezugsebene ermöglicht. Dabei lässt sich mit dieser Anordnung noch selbst ein Koordinatenpunkt auf der Objektträgerplatte inspizieren, der exakt durch die xy-Koordinate der Schwenkachse 10 des über Kopf montierten Stativfußes 4 des Kamerastativs definiert ist.

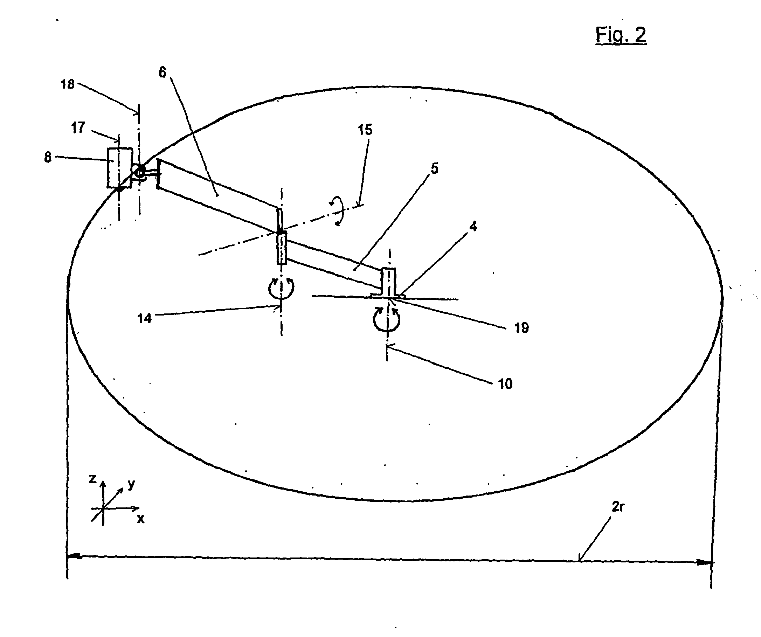

Ein zweites Ausführungsbeispiel des gelenkigen Kamerastativs mit den Merkmalen der Erfindung ist in der Figur 2 dargestellt. Im Gegensatz zu der in Figur 1 gezeigten Über-Kopf-Montage ist bei dem in Figur 2 gezeigten Ausführungsbeispiel der Stativfuß 4 im Zentrum einer kreisrunden Objektträgerplatte 2 fixiert. Im Gegensatz zu dem in Figur 1 gezeigten Ausführungsbeispiel steht also das unmittelbare Zentrum der Objektträgerplatte 2 nicht zum Positionieren von Prüflingen zur Verfügung. Diese Einschränkung ist jedoch gegen eine höhere Flexibilität der in Figur 2 gezeigten Anordnung zu sehen. Selbst wenn für bestimmte Prüfaufgaben eine Objektträgerplatte mit einem Durchmesser von beispielsweise 0,5-1,0 m erforderlich ist, so lässt sich die in Figur 2 gezeigte Vorrichtung noch ohne Weiteres auf einem leicht verfahrbaren Rolltisch montieren. Dadurch lässt sich die solcher Art ortsungebundene Prüfvorrichtung je nach Bedarf von Einsatzort zu Einsatzort verfahren, ohne dass eine Über-Kopf-Montage zunächst demontiert und dann wiederum neu montiert und justiert werden muss.

Ein weiterer Vorteil des Kamerastativs gemäß der Erfindung, der auch bei der Vorrichtung gemäß Figur 1 gegeben ist, lässt sich aus der Darstellung des Ausführungsbeispiels der Erfindung in Figur 2 augenfällig ablesen. Dieser Vorteil ist in der enormen Prüffeldfläche bei vergleichsweise minimaler und leichter Auslegung des Stativs begründet. Wenn zum Beispiel der Zwischenarm 5 und der Kameraträgerarm 6 jeweils die Länge eines üblichen Schreibtischlineals von rund 30 cm Länge aufweisen, so kann mit einem solchen Stativ, das in der in Figur 1 gezeigten eingeschwenkten Position einen Raumbedarf von nicht mehr als 30 cm Länge in der xy-Ebene erfordert, ein kreisförmiges Prüffeld mit einem Durchmesser von rund 1,2 m, entsprechend einer verfügbaren Prüffeldfläche auf der Objektträgerplatte von mehr als 1,0 m² realisiert werden.

## Patentansprüche

1. Ortsfest montierbares, gelenkiges Kamerastativ, insbesondere für eine dokumentierende, routinemäßige optische Qualitätsprüfung und Fertigungsprozessprüfung technischer Teile aus Stichproben, Kleinserien oder Vorserien, mit einer Kamera (8), einem in einer in xy-Bezugsebene (1) lösbar oder dauerhaft ortsfest fixierbaren Stativfuß (4), einem Zwischenarm (5) und einem Kameraträgerarm (6), bei dem:
- der Zwischenarm (5) fußseitig über ein senkrecht zur xy-Bezugsebene (1) starr in z-Richtung ausgerichtetes Schwenklager (9) in der xy-Bezugsebene (1) drehbar und in z-Richtung variabel höhenfixierbar angelenkt ist,
- der Kameraträgerarm (6) als Nullkraftarm ausgebildet und am kopfseitigen Ende des Zwischenarms (5) über ein senkrecht zur xy-Bezugsebene (1) in z-Richtung ausgerichtetes Schwenklager (12) in der xy-Bezugsebene (1) drehbar und gleichzeitig um eine komplanar zur xy-Bezugsebene (1) und senkrecht zur Längserstreckung des Kameraträgerarmes (6) ausgerichtete Schwenkachse (15) des Kameraträgerarmes (6) kopfseitig (16) in z-Richtung höhenverstellbar angelenkt ist, und
- der Kameraträgerarm (6) seinerseits kopfseitig einen Kameraanschluss (7) zum bedarfsweise lösbaren Befestigen der Kamera (8) trägt,
wobei sowohl der Zwischenarm (5) über das Schwenklager (9) als auch der Kameraträgerarm (6) über das Schwenklager (12) jeweils in der xy-Bezugsebene (1) um 360° frei drehbar angelenkt sind, und ein Anstellwinkel (α) des Zwischenarms (5) gegenüber der xy-Bezugsebene (1) variabel einstellbar ist.

2. Kamerastativ nach Anspruch 1, **gekennzeichnet durch** ein fixiertes Anstellen des Zwischenarmes (5) gegenüber der xy-Bezugsebene, wobei der Anstellwinkel (α) bis zu ± 60° beträgt.

3. Kamerastativ nach einem der Ansprüche 1 oder 2, **gekennzeichnet durch** eine ortsfeste Fixierung des Stativfußes (4) in z-Richtung oberhalb der scheibenförmigen Drehräume des Zwischenarmes (5), des Kameraträgerarmes (6) und der Kamera (8) sowie oberhalb einer in der xy-Bezugsebene unter diesen scheibenförmigen Drehräumen vorgesehenen Objektträgerplatte (2).

4. Kamerastativ nach einem der Ansprüche 1 oder 2, **gekennzeichnet durch** eine ortsfeste Fixierung des Stativfußes (4) in z-Richtung unterhalb der scheibenförmigen Drehräume des Zwischenarmes (5), des Kameraträgerarmes (6) und der Kamera (8) seitlich an oder zentral auf einer in der xy-Bezugsebene unter diesen scheibenförmigen 15 Drehräumen vorgesehenen Objektträgerplatte (2).

5. Kamerastativ nach einem der Ansprüche 1 bis 4, **gekennzeichnet durch** einen Kameraanschluss (7) in Form eines arretierbaren Kugelgelenkes.

6. Kamerastativ nach einem der Ansprüche 1 bis 5, **gekennzeichnet durch** einen Kameraanschluss (7) mit einer mechanischen oder elektromotorischen, gegebenenfalls elektronisch gesteuerten Kameraführungskorrektur dergestalt, dass die Kamera bei einem Verschwenken des Kameraträgerarmes (6) um dessen horizontale, in der xy-Bezugsebene ausgerichtete Schwenkachse (15) stets exakt in Richtung der z-Achse ausgerichtet bleibt.

7. Kamerastativ nach einem der Ansprüche 1 bis 6, **gekennzeichnet durch** eine kreisförmige oder kreissektorförmige oder regelmäßig polygonale Objektträgerplatte (2) mit einem Radius (r) oder einem Radius des konturumschließenden Kreises, der bei gestrecktem und kollinear ausgerichtetem Zwischenträgerarm (5) und Kameraträgerarm(6) im Wesentlichen gleich dem Abstand zwischen dem Schwenklager (10) des Stativfußes (4) und der optischen Achse (17) der Kamera (8) ist.

8. Kamerastativ nach einem der Ansprüche 1 bis 7, **gekennzeichnet durch** eine am Kameraanschluss (7) angeschlossene Videokamera (8), die über einen integrierten Sender/Empfänger (AP) in ein kabelfreies lokales Netzwerk (WLAN) eingebunden ist.

## Claims

1. A stationarily mountable, articulated camera tripod, particularly for a documenting, routine optical quality inspection and production process inspection of technical parts from random samples, small runs or pre-production runs having a camera (8), a tripod base (4) which is releasably or permanently stationarily fixable in a xy-reference plane (1), an intermediate arm (5) and a camera carrier arm (6), wherein:
- the intermediate arm (5) is rotatable in the xy-reference plane (1) at its base via a pivot bearing (9), which is aligned perpendicularly relative to the xy-reference plane (1) and rigidly in the z-direction and articulated height adjustably in the z-direction,
- the camera carrier arm (6) is provided as a zero-force arm and, at the head end of the intermediate arm (5), is rotatable in the xy-reference plane (1) via a pivot bearing (12), which is aligned perpendicularly relative to the xy-reference plane (1) in the z-direction, and at the same time is articulated height adjustably in the z-direction at the head end (16) around a pivot axis (15) of the camera carrier arm (6), which is aligned coplanarly relative to the xy-reference plane (1) and perpendicularly relative to the longitudinal extension of the camera carrier arm (6), and
- the camera carrier arm (6) for its part bears a camera connector (7) at its head end for optional releasable attachment of the camera (8),
wherein the intermediate arm (5) via the pivot bearing (9) and the camera carrier arm (6) via the pivot bearing (12) are each freely rotatably articulated through 360° in the xy-reference plane (1) and a setting angle (α) of the intermediate arm (5) is variably adjustable relative to the xy-reference plane (1).

2. The camera tripod according to Claim 1, **characterized by** a fixed setting of the intermediate arm (5) relative to the xy-reference plane, wherein the setting angle (α) amounts up to ± 60°.

3. The camera tripod according to one of the claims 1 or 2, **characterized by** a stationary fixation of the tripod base (4) in the z-direction above the disc-shaped rotation spaces of the intermediate arm (5), the camera carrier arm (6) and the camera (8) as well as above an object carrier plate (2) provided in the xy-reference plane below said disc-shaped rotation spaces.

4. The camera tripod according to one of the claims 1 or 2, **characterized by** a stationary fixation of the tripod base (4) in the z-direction below the disc-shaped rotation spaces of the intermediate arm (5), the camera carrier arm (6) and the camera (8) on the side or in the centre of an object carrier plate (2) provided in the xy-reference plane below said disc-shaped rotation spaces.

5. The camera tripod according to one of the claims 1 to 4, **characterized by** a camera connector (7) in the form of a lockable ball joint.

6. The camera tripod according to one of the claims 1 to 5, **characterized by** a camera connector (7) having a mechanically or electromotive, if necessary an electronically-controlled camera guidance corrector such that by pivoting the camera carrier arm (6) around its horizontal pivot axis (15), which is aligned in the xy-reference plane, the camera always remains aligned exactly in direction of the z-axis.

7. The camera tripod according to one of the claims 1 to 6, **characterized by** a circular or sector-shaped or regular polygonal object carrier plate (2) having a radius (r) or a radius of the contour-encompassing circle, which in the case of the extended and collinear aligned intermediate carrier arm (5) and camera carrier arm (6) is substantially the same as the distance between the pivot bearing (10) of the tripod base (4) and the optical axis (17) of the camera (8).

8. The camera tripod according to one of the claims 1 to 7, **characterized by** a video camera (8) connected to the camera connector (7) which video camera (8) is integrated into a wireless local network (WLAN) via an integrated transmitter/ receiver (AP).

## Revendications

1. Pied de caméra articulé montable à un endroit fixe, en particulier pour un contrôle documentant de routine de qualité optique et de processus de fabrication de pièces techniques d'échantillons pris au hasard, de petites séries ou de préséries, avec une caméra (8), un pied (4) démontable dans un plan de référence xy (1) ou pouvant être fixé durablement à un endroit, un bras intermédiaire (5) et un bras porteur de caméra (6), pour lequel :
- le bras intermédiaire (5) est rotatif côté pied dans le plan de référence xy (1) via un palier d'articulation (9) orienté de manière rigide dans le sens z perpendiculairement au plan de référence xy (1) et articulé, fixable à hauteur variable, dans le sens z,
- le bras porteur de caméra (6) est formé comme bras à force nulle et rotatif dans le plan de référence xy (1) à l'extrémité côté tête du bras intermédiaire (5) via un palier d'articulation orienté dans le sens z perpendiculairement au plan de référence xy (1) et simultanément autour d'un axe de pivotement (15) coplanaire au plan de référence xy (1) et orienté perpendiculairement à l'extension longitudinale du bras porteur de caméra (6), articulé à hauteur variable côté tête (16) dans le sens z, et
- le bras porteur de caméra (6) porte pour sa part côté tête un raccord de caméra (7) pour la fixation amovible de la caméra (8) en cas de besoin,
étant donné qu'aussi bien le bras intermédiaire (5) via le palier d'articulation (9) que le bras porteur de caméra (6) via le palier d'articulation (12) sont articulés chacun dans le plan de référence xy (1) de façon librement rotative à 360°, et un angle d'incidence (α) du bras intermédiaire (5) peut être variablement ajusté par rapport au plan de référence xy (1).

2. Pied de caméra selon la revendication 1, **caractérisé par** un réglage fixe du bras intermédiaire (5) par rapport au plan de référence xy, l'angle d'incidence (α) étant jusqu'à ±60°.

3. Pied de caméra selon l'une quelconque des revendications 1 ou 2, **caractérisé par** une fixation à un endroit fixe du pied (4) dans le sens z au-dessus des espaces de rotation en forme de disques du bras intermédiaire (5), du bras porteur de caméra (6) et de la caméra (8) ainsi qu'au-dessus d'une plaque support d'objet (2) prévue dans le plan de référence xy en-dessous de ces espaces de rotation en forme de disques.

4. Pied de caméra selon l'une quelconque des revendications 1 ou 2, **caractérisé par** une fixation à un endroit fixe du pied (4) dans le sens z au-dessous des espaces de rotation en forme de disques du bras intermédiaire (5), du bras porteur de caméra (6) et de la caméra (8) latéralement ou centralement sur une plaque support d'objet (2) prévue dans le plan de référence xy en-dessous de ces espaces de rotation en forme de disques.

5. Pied de caméra selon l'une quelconque des revendications 1 à 4, **caractérisé par** un raccord de caméra (7) sous forme de joint à rotule blocable.

6. Pied de caméra selon l'une quelconque des revendications 1 à 5, **caractérisé par** un raccord de caméra (7) avec une correction de guidage de caméra mécanique ou électromotrice à commande électronique de manière à ce que la caméra reste toujours orientée exactement dans le sens de l'axe z en cas de pivotement du bras porteur de caméra (6) autour de son axe de pivotement (15) horizontal orienté dans le plan de référence xy.

7. Pied de caméra selon l'une quelconque des revendications 1 à 6, **caractérisé par** une plaque support d'objet (2) circulaire ou en forme de secteurs circulaires ou régulièrement polygonale avec un rayon (r) ou un rayon du cercle confinant les contours, qui est, le bras porteur intermédiaire (5) et le bras porteur de caméra (6) étant tendus et colinéaires, essentiellement égal à la distance entre le palier d'articulation (10) du pied (4) et l'axe optique (17) de la caméra (8).

8. Pied de caméra selon l'une quelconque des revendications 1 à 7, **caractérisé par** une caméra vidéo (8), raccordée à un raccord de caméra (7), qui est intégrée par l'intermédiaire d'un émetteur-récepteur (AP) intégré dans un réseau local sans fil (WLAN).
